# EUROPEAN PATENT APPLICATION

(11) **EP 4 852 170 A2**
(43) Date of publication of application: **09.12.2026**
(21) Application number: 26182803.2
(22) Date of filing: 03.06.2026
(51) Int. Cl.: H01M 50/213, H01M 50/24, H01M 50/247, H01M 50/545, H01M 50/548, H01M 50/559, H01M 50/571

(54) **POWER TOOL BATTERY PACK WITH A CORROSION INSULATING LAYER FOR BATTERY CELLS**

(30) Priority: 04.06.2025 US 202519228619
(71) Applicant: Black & Decker, Inc., New Britain, CT 06053 (US)
(72) Inventor: RIGDON, William, Baltimore, 21211 (US); FERRER, Anthony J., York, 17402 (US); PRASATH, Varun, Bryn Mawr, 19010 (US); MARCARELLI, Alex, Baltimore, 21230 (US)
(74) Representative: SBD IPAdmin

(57) **Abstract**

A battery pack for a power tool, the battery pack including a battery pack housing, and a plurality of battery cells held by a cell holder in an interior of the battery pack housing, each battery cell including an end with a positive terminal, a wall forming a portion of a negative terminal, an end of the wall forming a shoulder. The battery pack includes conductive battery straps contacting the battery cells, each battery strap contacting the positive terminal of at least one of the battery cells, and an insulating element at least partially disposed between the battery straps and the end of the respective at least one battery cell, the insulating element extending across the shoulder of the respective at least one battery cell to inhibit electrical shorting from the positive terminal to the wall thereof.

## Description

The present disclosure relates to a battery pack of a cordless power tool system, and more specifically, to a battery pack with an insulating layer for battery cells.

Removable, rechargeable battery packs are prevalent as more devices become cordless to take advantage of advances in battery technology. Such battery packs are commonly part of cordless power tool systems and are designed and configured to operate with a variety of cordless power tools.

Rechargeable battery packs may be prone to electrochemical corrosion over time, especially when exposed to water and other fluids. Corrosion may form conductive pathways between a positive terminal and a negative terminal of one or more battery cells, which may lead to short circuit conditions. These short circuits may cause overheating, unintended discharge, and other operational challenges. When multiple battery cells are connected together, the occurrence and severity of corrosion may increase.

By way of qualifying different battery packs, Applicant has observed corrosion after dunking a battery pack with the battery cells in a saltwater bath. The saltwater dunk test may mimic accelerated degradation of the battery pack over an operational life of the battery pack. Specifically, for the saltwater dunk test, a battery pack is submerged in a saline solution (NaCl salt at 35 g/L) for a brief period of about 10 seconds before removal, and the battery cells of the battery pack are inspected for corrosion and short circuits. In this case, it is determined that the corrosive effects of the saltwater dunk test may cause an insulating sleeve (e.g. PET - polyethylene terephthalate) of an associated battery cell to degrade and crack through hydrolysis reactions. This corrosive effect may be pronounced in areas near a conductive, positive battery terminal and an interconnect, i.e., a metal strap welded to the battery terminal (hereinafter, simply referred to as a battery strap).

Applicant has observed that the cracked cell sleeve may expose a negatively charged metal housing/casing of the battery cell, especially in a shoulder area of the battery cell. The exposed shoulder, which is near the positive battery terminal and battery strap may lead to a short circuit between the positively charged battery strap and the negatively charged sidewall (or wall) of the housing of the battery cell, as copper components of the battery strap form metal oxides, hydroxides and/or other corrosive byproducts which eventually accumulates to a sufficient amount to form a short circuit path between the positively charged battery strap and the negatively charged sidewall of the battery cell(s). As the corrosion reactions proceed, they generate heat and dry out the electrolyte which results in a transition from electrochemical reaction driven short circuits to electronic short circuits as the corrosion products can be semi-conductive or conductive enough to allow direct electron flow.

### SUMMARY

Embodiments and aspects of the present disclosure provide a power tool system with a detachable battery pack and a battery pack with an insulating barrier for protection of cylindrical cell terminals of battery cells held in the battery pack.

According to one aspect, the disclosure is generally directed to a battery pack for a power tool, the battery pack including a battery pack housing, and a plurality of battery cells held by a cell holder in an interior of the battery pack housing, each of the plurality of battery cells including an end with a positive terminal, a wall of the battery pack housing forming a portion of a negative terminal, an end of the wall forming a shoulder. The battery pack includes a plurality of battery straps contacting the plurality of battery cells, each of the plurality of battery straps contacting the positive terminal of at least one of the plurality of battery cells, and an insulating element at least partially disposed between the plurality of battery straps and the end of the respective at least one battery cell, the insulating element extending across the shoulder of the respective at least one battery cell to inhibit electrical shorting from the positive terminal to the wall of the respective at least one battery cell.

In some example implementations, each battery cell of the plurality of battery cells is received in a respective insulating sleeve, the insulating element including an insulating layer and the insulating layer at least partially overlapping the insulating sleeve of the respective at least one battery cell.

In some example implementations, the insulating sleeve at least partially overlaps an insulating ring of a battery cell of the plurality of battery cells, the insulating ring surrounding the positive terminal between the positive terminal and the shoulder of the battery cell of the plurality of battery cells.

In some example implementations, the insulating sleeve comprises polyethylene terephthalate (PET), and the insulating layer comprises at least one of: a polyimide, polypropylene, a low density polyethylene, polyphenylene sulfide, mica or another hydrolysis resistant material.

In some example implementations, the insulating layer comprises a plurality of through holes for being aligned with the positive terminal of the respective at least one battery cell.

In some example implementations, the end of each battery cell of the plurality of battery cells is a positive end and each battery cell of the plurality of battery cells comprises a negative end opposite the positive end and including a portion of the negative terminal, wherein the plurality of battery straps is a first plurality of battery straps, the insulating layer is a first insulating layer.

In some example implementations, the battery pack further includes a second plurality of battery straps contacting the plurality of battery cells opposite the first plurality of battery straps, each battery strap contacting the negative terminal of at least one battery cell of the plurality of battery cells, and a second insulating layer between the second plurality of battery straps and the end of the respective at least one other battery cell, the insulating layer extending across the shoulder of the respective at least one other battery cell to inhibit electrical shorting from the positive terminal to the negative wall of the battery cell.

In some example implementations, at least one through hole of the plurality of through holes has a radius smaller than a radius of the end of each of battery cell of the plurality of battery cells.

In some example implementations, the insulating layer has a thickness of about 0.05mm to about 1mm.

According to another aspect, the disclosure is generally directed to a battery pack for a power tool, the battery pack including a battery pack housing, and a number of battery cells held by a cell holder in an interior of the battery pack housing, each battery cell including an end with a positive terminal, an insulating ring surrounding the positive terminal, and a wall forming a portion of a negative terminal, an end of the wall forming a shoulder. The battery pack includes battery straps contacting the battery cells, each battery strap contacting the positive terminal of at least one of the battery cells, and an insulating element at least partially disposed between at least one of battery straps and the end of a respective at least one battery cell, the insulating element extending across the shoulder of the respective at least one battery cell and onto the wall thereof to extend a creepage distance from the positive terminal to the wall of the battery cell.

In some example implementations, each battery cell of the plurality of battery cells is received in a respective insulating sleeve, the insulating element includes an insulating cap and the insulating cap is at least partially overlapping the insulating sleeve of the respective at least one battery cell, wherein the insulating sleeve comprises polyethylene terephthalate (PET), and the insulating cap comprises at least one of: a polyimide, polypropylene, polyethylene, mica, or another hydrolysis resistant material.

In some example implementations, the insulating cap comprises a first portion positioned on an end of the respective at least one battery cell, and a second portion extending downwardly from the first portion.

In some example implementations, the insulating cap comprises a second portion, the second portion comprising a plurality of tabs, each tab of the plurality of tabs separated by a respective slit and for being positioned extending at least partially along the wall of the respective at least one battery cell.

In some example implementations, the insulating cap comprises a first portion and a second portion comprising a plurality of tabs foldably connected to the first portion at a respective fold line, each tab of the plurality of tabs extending at least partially along the wall of the respective at least one battery cell.

In some example implementations, the end of each battery cell of the plurality of battery cells is a positive end and each battery cell of the plurality of battery cells comprises a negative end opposite the positive end and including a portion of the negative terminal, wherein the insulating cap is a first insulating cap, and the battery pack further comprises a second insulating cap positioned opposite the first insulating cap along the plurality of battery cells and at least partially covering a positive end of at least one battery cell of the plurality of battery cells.

In some example implementations, the insulating cap comprises a first portion comprising a plurality of tabs folded onto the end of the respective at least one battery cell.

In some example implementations, the insulating cap comprises a second portion at least partially extending along the wall of the respective at least one battery cell, the plurality of tabs of the first portion foldably connected to the second portion.

According to another aspect, the disclosure is generally directed to a power tool system, the power tool system includes a power tool and a battery pack detachably coupled to the power tool to provide electrical power to the power tool, the battery pack according to various aspects previously described.

These and other aspects of the present disclosure, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. In some example implementations of the present disclosure, the structural components illustrated herein are drawn to scale. It is to be expressly understood, however, that the drawings are for the purpose of illustration and description only and are not intended as a definition of the limits of the present disclosure. It shall also be appreciated that the features of some example implementations disclosed herein may be used in other embodiments disclosed herein. As used in the specification and in the claims, the singular form of "a", "an", and "the" include plural referents unless the context clearly dictates otherwise.

Other aspects, features, and advantages of the present disclosure will become apparent from the following detailed description, the accompanying drawings, and the appended claims.

Each of the aspects described above and in the following description may be used in any combination of one or more of these aspects, as will be understood to one of ordinary skill in the art.

### BRIEF DESCRIPTION OF THE DRAWINGS

FIG. 1 is an isometric view of a battery pack for a power tool system in accordance with example embodiments of the present disclosure.
FIGs. 2A-2B are exploded views of the battery pack of FIG. 1.
FIGs. 3A-3B are isometric exploded views of a cell holder, a plurality of battery cells positioned in the cell holder, a pair of insulating elements and a plurality of battery straps according to an example embodiment of the disclosure.
FIG. 4A is an isometric view of an example cylindrical battery cell according to example embodiments of the present disclosure.
FIG. 4B is a side view of the cylindrical battery cell of FIG. 4A.
FIG. 4C is a section view of the cylindrical battery cell of FIG. 4A taken along section line A-A of FIG. 4D.
FIG. 4D is a top view of the cylindrical battery cell of FIG. 4A.
FIG. 4E is a detail view of area of Detail A identified in FIG. 4C.
FIGs. 5A-5D are isometric and side views of a cell holder and a plurality of battery cells positioned in the cell holder according to an example embodiment of the disclosure.
FIG. 6 is an elevation view of an insulating element according to an example embodiment of the present disclosure.
FIGs. 7A-7D are isometric and side views of a cell holder, a plurality of battery cells positioned in the cell holder and the insulating element of FIG. 6 according to an example embodiment of the disclosure.
FIGs. 8A-8B are isometric and side views of a first side of a cell holder, a plurality of battery cells positioned in the cell holder, an insulating element and a first plurality battery straps and FIGs. 8C-8D are isometric and side views of a second side of the cell holder, the plurality of battery cells positioned in the cell holder, and the insulating element and a second plurality of battery straps.
FIG. 9 is a partial section view along section line B-B of FIG. 8B, without the cell holder.
FIG. 10 is a partial section view along section line C-C of FIG. 8B, without the cell holder.
FIG. 11 is a partial section view along section line D-D of FIG. 8B, without the cell holder.
FIG. 12 is an elevation view of another insulating element according to another example embodiment of the disclosure.
FIG. 13 is a plan view of an insulating element according to another example embodiment of the disclosure.
FIG. 14A is an isometric view of an insulating element of FIG. 13 prior to folding and placement on a battery cell according to an example embodiment of the disclosure.
FIG. 14B is an isometric view of a folded insulating element of FIG. 13 prior to placement on a battery cell according to an example embodiment of the disclosure.
FIG. 14C is an isometric view of a folded insulating element of FIG. 13 placed on a battery cell according to an example embodiment of the disclosure.
FIGs. 15A-15B are isometric exploded views of a cell holder, a plurality of battery cells, a plurality of insulating elements and a plurality of battery straps according to an example embodiment of the disclosure.
FIGs. 16A-16D are isometric and side views of a cell holder, a plurality of battery cells positioned in the cell holder and a plurality of insulating elements positioned on the plurality of battery cells according to an example embodiment of the disclosure.
FIGs. 17A-17D are isometric and side views of a cell holder, a plurality of battery cells positioned in the cell holder, a plurality of insulating elements positioned on the plurality of battery cells and a plurality of battery straps according to an example embodiment of the disclosure.
FIG. 18 is an isometric view of two battery cells connected by a battery strap according to an example embodiment of the disclosure.
FIG. 19 is a partial section view along section line E-E of FIG. 17B, without the cell holder.
FIG. 20 is a partial section view along section line F-F of FIG. 17B, without the cell holder.
FIG. 21A is an isometric view of an insulating element of FIG. 13 prior to folding and placement on a battery cell according to an example embodiment of the disclosure.
FIG. 21B is an isometric view of an insulating element of FIG. 13 placed on a battery cell prior to folding according to an example embodiment of the disclosure.
FIG. 21C is an isometric view of a folded insulating element of FIG. 13 on a first end of a battery cell according to an example embodiment of the disclosure.
FIG. 22 is a plan view of an insulating element according to another example embodiment of the disclosure.
FIG. 23 is a plan view of an insulating element according to another example embodiment of the disclosure.
FIG. 24A an isometric view of an insulating element of FIG. 23 prior to rolling, folding and placement on a battery cell according to an example embodiment of the disclosure.
FIG. 24B an isometric view of a rolled insulating element of FIG. 23 prior to folding and placement on a battery cell according to an example embodiment of the disclosure.
FIG. 24C an isometric view of a rolled and folded insulating element of FIG. 23 prior to placement on a battery cell according to an example embodiment of the disclosure.
FIG. 24D an isometric view of a rolled and folded insulating element a battery cell according to an example embodiment of the disclosure.
FIG. 25A an isometric view of an insulating element of FIG. 23 prior to rolling and folding on a battery cell according to an example embodiment of the disclosure.
FIG. 25B an isometric view of a rolled insulating element of FIG. 23 on a battery cell prior to folding according to an example embodiment of the disclosure.
FIG. 25C an isometric view of a rolled and folded insulating element of FIG. 23 on a battery cell according to an example embodiment of the disclosure.
FIG. 26 is a plan view of an insulating element according to another example embodiment of the disclosure.

### DETAILED DESCRIPTION

Various embodiments and aspects of the disclosures will be described with reference to details discussed below, and the accompanying drawings will illustrate the various embodiments. The following description and drawings are illustrative of the disclosure and are not to be construed as limiting the disclosure. Numerous specific details are described to provide a thorough understanding of various embodiments of the present disclosure. However, in certain instances, well-known or conventional details are not described in order to provide a concise discussion of embodiments of the present disclosures.

Reference in the specification to "one embodiment" or "an embodiment" means that a particular feature, structure, or characteristic described in conjunction with the embodiment may be included in at least one embodiment of the disclosure. The appearances of the phrase "in one embodiment" in various places in the specification do not necessarily all refer to the same embodiment.

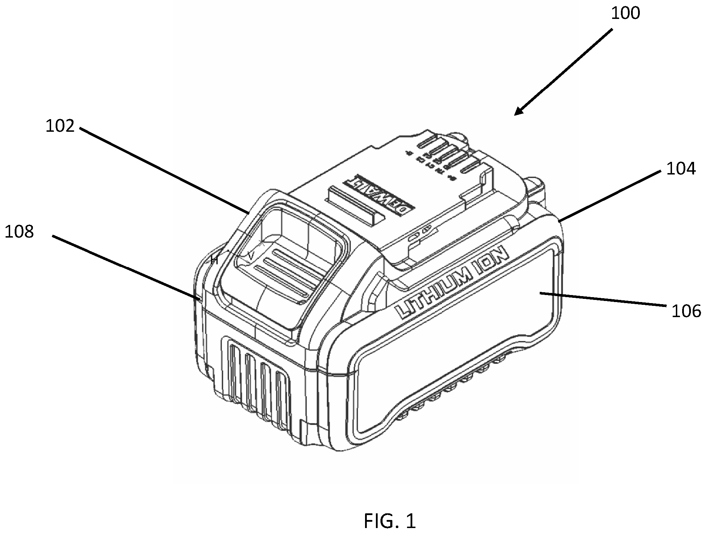

FIG. 1 is an isometric view of a battery pack 100 for a power tool system in accordance with example embodiments of the present disclosure. The battery pack 100 may be a detachable, rechargeable battery pack for powering a cordless power tool. Such power tools may include, but are not limited to, a drill, an impact driver, a circular saw, a grinder and a bandsaw.

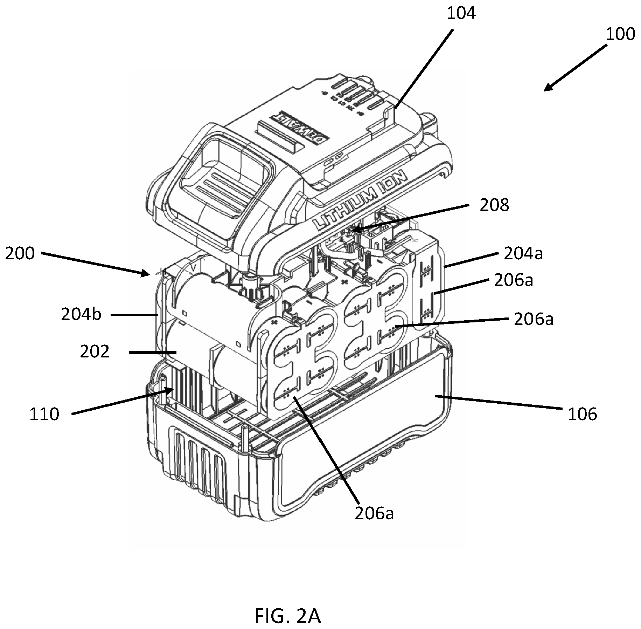

The battery pack 100 may include a battery pack housing 102 and a core pack 200 (as shown in the exploded view of the battery pack 100 in FIGs. 2A-2B) positioned in the interior of the battery pack housing 102. The battery pack housing 102 may thus provide a protective structure for the core pack 200. The battery pack housing 102 may be constructed in various configurations. For example, a top/upper housing portion 104 and a bottom/lower housing portion 106 may be coupled/joined or otherwise mated together at a horizontal seam 108 to form the battery pack housing 102. In another embodiment, two (left and right) side portions may be coupled/joined or otherwise mated together at a vertical seam to form the battery pack housing 102. The battery pack housing 102 may thus be arranged to form an interior/internal/inner cavity 110 to hold the core pack 200. The battery pack housing 102 may be constructed of plastic or other suitable material, and other configurations for forming the battery pack housing 102 are contemplated without departing from the disclosure.

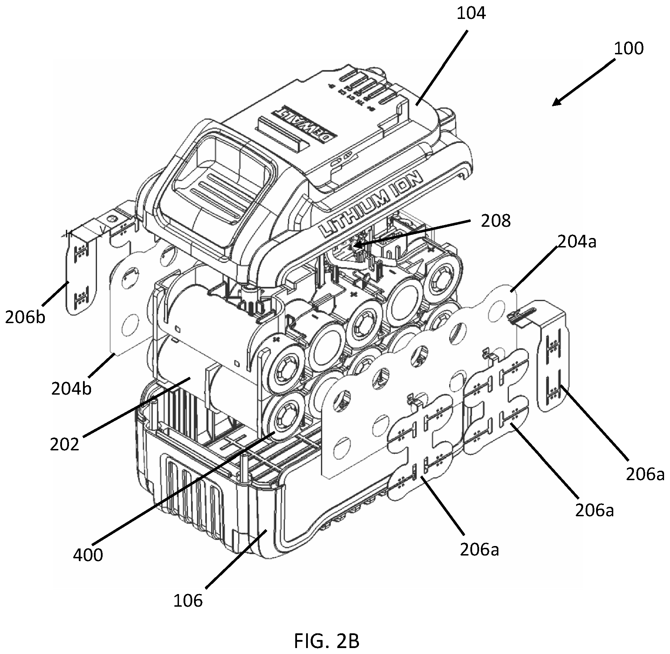

FIGs. 2A and 2B are isometric exploded views of the battery pack housing 102 and the core pack 200. The core pack 200 may include a cell holder 202 having a first side 202a and a second side 202b, a plurality (or set) of battery cells 400, a first insulating element 204a adjacent to the first side 202a of the cell holder 202 and a second insulating element 204b adjacent to the second side 202b of the cell holder 202, a first set of conductive battery straps (sometimes simply referred to as battery straps 206) 206a adjacent to the first side 202a of the cell holder 202 and the first insulating element 204a, a second set of conductive battery straps 206b (sometimes simply referred to as battery straps 206) adjacent to the second side 202b of the cell holder 202 and the second insulating element 204b and an electronics module 208 including a plurality of various electronic components. In the illustrated example embodiment, the battery pack 100 includes ten battery cells 400. The battery cells 400 are connected in a 5S2P configuration. In other example embodiment, the battery pack 100 may include more or fewer battery cells and the battery cells may be connected in other configurations and still fall within the scope of the present disclosure. In the illustrated example embodiment, the first insulating element 204a and the second insulating element 204b may be in the form of a flat layer, as described in more detail below.

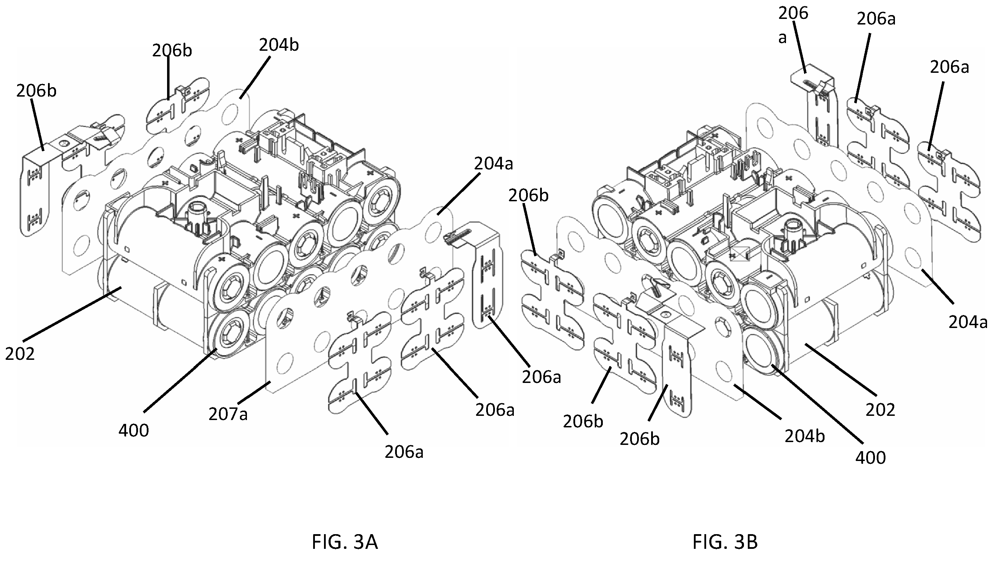

FIG. 3A and 3B are exploded views of the core pack 200 with the electronics module 210 removed for purposes of clarity.

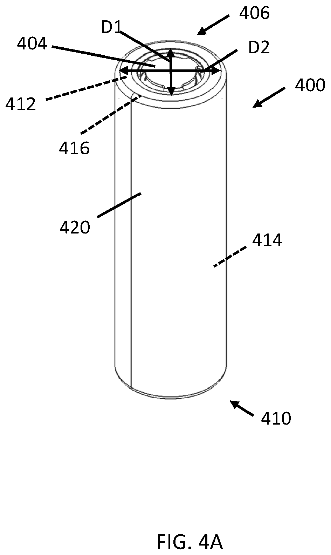

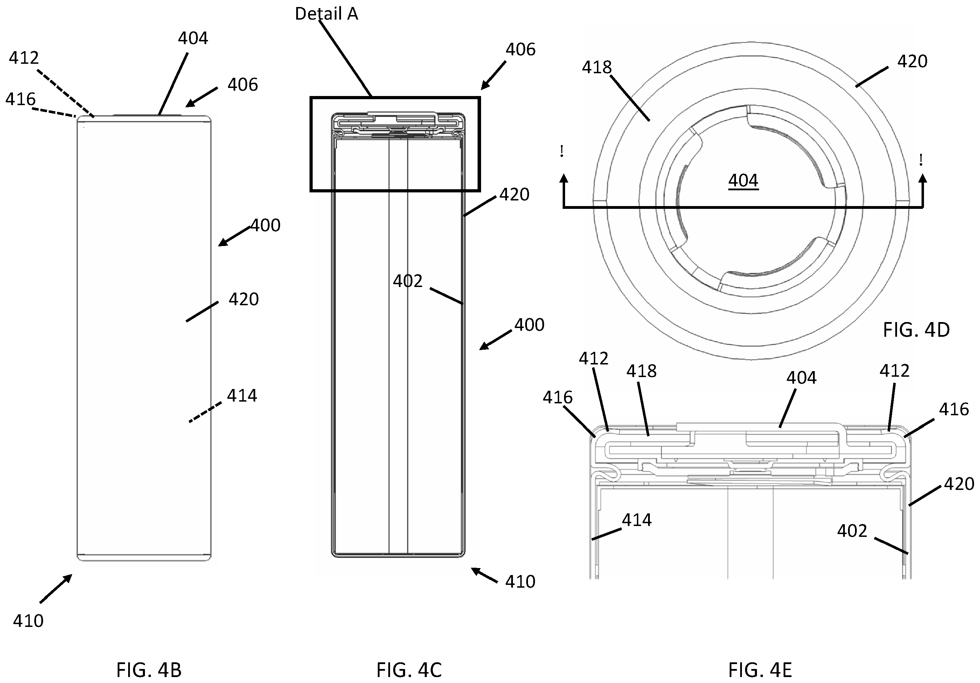

FIGs. 4A, 4B, and 4C are isometric, elevation, and section views, respectively, of a cylindrical battery cell 400 according to example embodiments of the present disclosure. The battery cell 400 may be a 18650-type battery cell or a 21700-type battery cell. The battery cells may be any one of: a lithium-ion battery cells, sodium-ion battery cells, lithium-sulfur battery cells, magnesium-ion battery cells, or a combination thereof.

The battery cell 400 may include a housing 402 sometimes referred to as a "can." The battery cell 400 may include an anode, a cathode, a separator, and an electrolyte in a jellyroll within the housing 402. The anode may be connected to a first "positive" terminal 404 at a first end 406 of the battery cell 400. The cathode may be connected to the housing 402 - negatively charging the housing 402. The battery cell 400 may present a second "negative" terminal 408 - a bottom surface of the housing 402 - at a second end 410 of the battery cell 400.

The housing 402 may include a top surface 412 at the first end 406 of the battery cell 400 forming an annular ring about the first terminal 404, a sidewall 414 forming a hollow cylinder - in which the jellyroll is received, and a shoulder 416 connecting the top surface 412 to the sidewall 414. The sidewall 414 extends between the shoulder 416 and the bottom surface 408 of the battery cell 400. As noted above, the top surface 412, the shoulder 416, the sidewall 414 and the bottom surface 408 of the housing 402 are connected to the cathode and therefore negatively charged. The positive terminal 404 may be separated from the housing 402/the negative terminal 408 by an insulating ring 418. The battery cell 400 may include a polyethylene terephthalate (PET) sleeve 420 surrounding the housing 402 to insulate/prevent exposure to the negative charge on the housing 402. The sleeve 420 may include an opening at the first end 406 to expose the positive terminal 404 and an opening at the second end 410 to expose the negative terminal 408. The sleeve 420 covers the top surface 412, the shoulder 416 and the sidewall 414 of the housing 402. The lead lines in FIGs. 4A and 4B are presented in a dashed form to indicate that the top surface 412, the shoulder 416 and the sidewall 414 are covered by the sleeve 420.

FIG. 4D is a top view at the first end 406 of the battery cell 400. As shown, the first end 406 includes the positive terminal 404. The insulation ring 418 encircles the positive terminal 404.

FIG. 4E is a partial elevation, section view at the first end 406 of the battery cell 400. At the top, there is the positive terminal 404 used for connecting the battery cell 400 to the battery strap 206. The insulating ring 418 surrounds the positive terminal 404 and prevents electrical contact between the positive terminal 404 and negatively charged parts of the battery cell 400. The housing 402 may provide structural integrity and protection for the battery cell 400.

Corrosive effects at exterior surfaces of the battery cell 400 may cause corrosion-induced short circuiting for the battery cell 400. For example, when a conductive plate (such as the battery strap 206) is placed at the first end 406 of the battery cell 400 to establish electrical connections to other battery cells 400, corrosion may cause shortened conductive paths between the positively charged first terminal 404 and the negatively charged housing 402, e.g., a short circuit condition. Here, the short circuit condition may occur when the PET sleeve 420 of the battery cell 400 cracks and provides an opportunity for a corrosion-induced short circuit path. The PET sleeve 420 of the battery cell 400 may crack due to degradation/attack from byproducts of the corrosive processes, which further causes chain scission in the polyester material, leading to cracks and breakdown of its insulation properties. The PET material is susceptible to hydrolytic attacks because ester bonds in PET can undergo hydrolysis when exposed to acidic or basic electrolytes. The electrolytic corrosion reactions in batteries have been found to produce and accumulate very alkaline hydroxide byproducts which break this ester linkage. The oxygen atoms may draw electron density away from the carbon, making the carbonyl carbon more vulnerable. Compared to other bonds in the PET polymer chains, ester bonds (which are relatively weak) in the PET polymers are more prone to degradation. It has been found that battery cell sleeves such as PET and other polymers which are subject to hydrolytic chemicals in addition to heat produced from corrosion and shorting reactions, makes those polymers especially susceptible to degradation and cracking. Furthermore, the polymers which remain under mechanical stress such as the cell insulator sleeves held in tension after their heat shrink during application to the cell, make them particularly vulnerable. Testing has shown that this insulator degradation is most severe when chemical, mechanical, and thermal stress are present. As result of loss of cell sleeve insulation, arcing, welding, and short circuit conditions may cause the battery cells to deteriorate, vent, or explode.

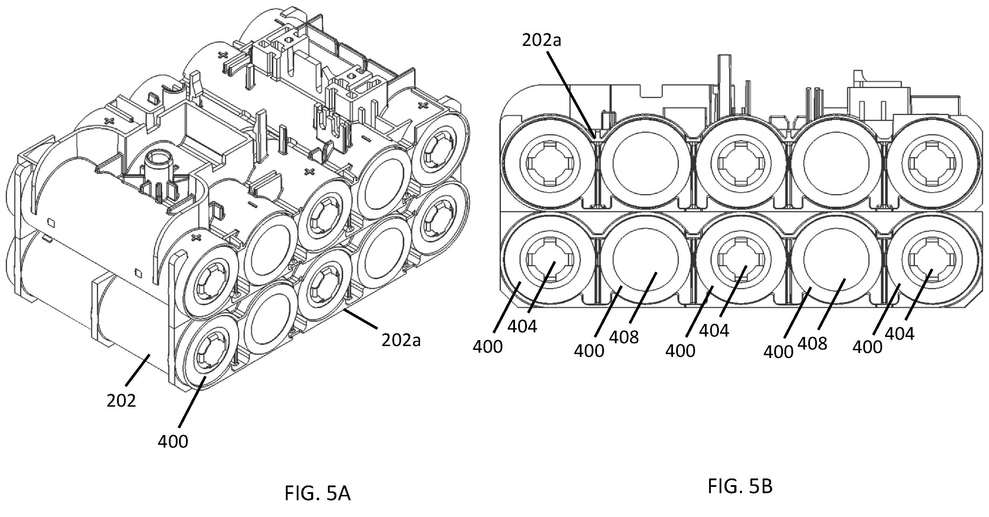

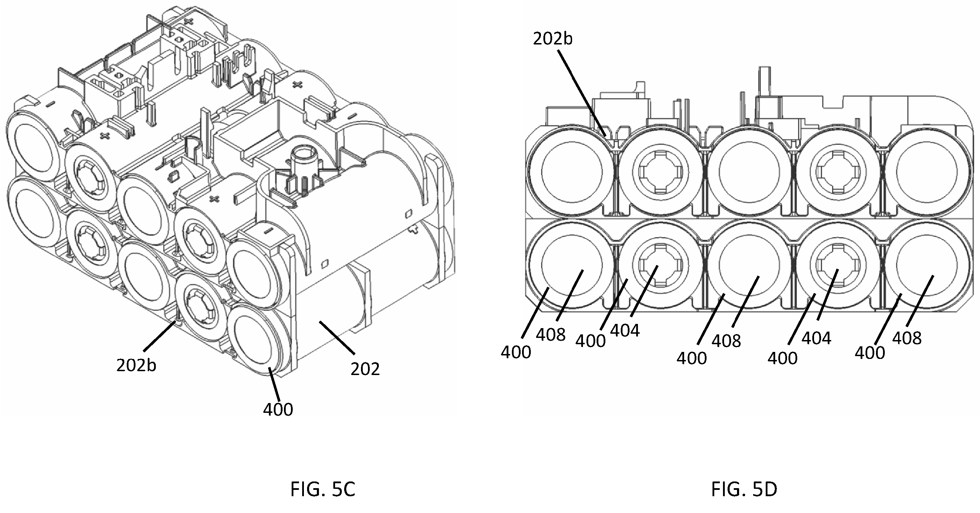

FIGs. 5A and 5B are isometric and elevation views, respectively, of the first side 202a of the cell holder 202 and the plurality of battery cells 400 positioned in the cell holder 202 and FIGs. 5C and 5D are isometric and elevation views, respectively, of the second side 202b of the cell holder 202 and the plurality of battery cells 400 positioned in the cell holder 202.

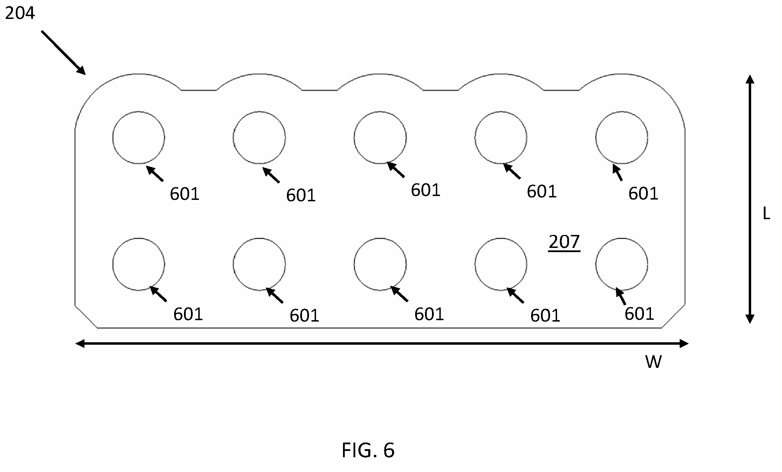

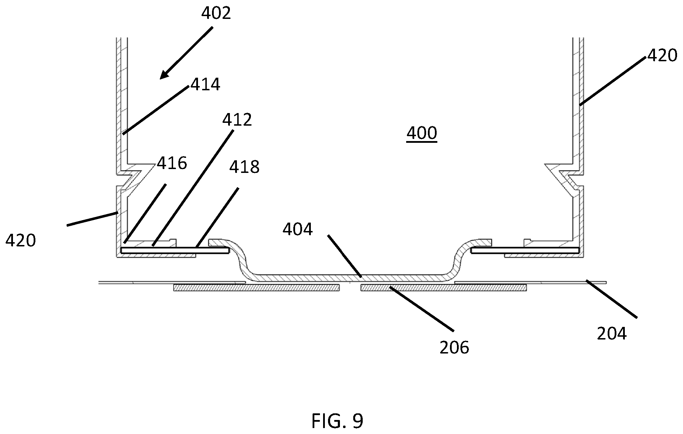

FIG. 6 is an elevation view of an example insulating element 204. In this example embodiment, the insulating element is in the form of a layer/sheet. The insulating layer/sheet 204 may be made of any insulating polymers that do not have ester bonds, such as mica, polyethylene (PE), polypropylene (PP), polyvinyl chloride (PVC), polyphenylene sulfide (PPS), polyimide (PI) material such as Kapton^{®} (available from E.I. du Pont de Nemours and Company), polytetrafluoroethylene (PTFE) material such as Teflon^{®} (available from E.I. du Pont de Nemours and Company), polyetheretherketone (PEEK), polyethylene naphthalate (PEN), polyvinyl chloride (PVC) or another hydrolysis resistant material or a combination thereof. A thickness T (see FIG. 9) of the insulating layer/sheet 204 may be between about 0.05mm and about 1mm. As shown in FIGs. 2A-2B, the insulating layer/sheet 204 may be disposed between a respective end of one or more battery cells 400 and respective battery straps 206 for electrical insulation therebetween. The insulating layer/sheet 204 may thus be positioned to extend a distance across the shoulder 416 of a respective battery cell 400 to inhibit electrical shorting between the positively charged first terminal 404 of the battery cell 400 or the battery strap 206 connected positively charged first terminal 404 and the negatively charged housing 402. As described herein, the illustrated insulating layer/sheet 204 may be one of the first insulating element 204a and the second insulating element 204b of the core pack 200.

In some embodiments, the insulating layer/sheet 204 is held between respective ends of battery cells 400 and respective battery straps 206 as the battery straps 206 are welded to terminals of the battery cells 400 at the respective ends 406, 410 thereof. In such an arrangement, the insulating layer/sheet 204 may be secured to respective ends 406, 410 of the battery cells 400 and respective battery straps 206 without gluing or bonding.

As shown in FIG. 6, the insulating layer/sheet 204 may include a number of through holes 601 corresponding to the number of battery cells 400 in the set of battery cells and in the configuration of the set of battery cells, e.g., two rows by five columns, in this example embodiment. The through holes 601 may be arranged for alignment with respective ends of battery cells 400 to allow these ends to be in contact with corresponding battery straps 206. In some embodiments, a diameter of the through holes 601 is smaller than an inner diameter D1 (See FIG. 4) of the insulating ring 418 corresponding to a positive end 406 of a respective battery cell 400.

In some embodiments, the diameter of the through holes 601 is smaller than a diameter D2 corresponding to an opening formed by the sleeve 420 at the first end 406 of the battery cell 400. In some embodiments, one or more edges of the insulating layer/sheet 204 includes one or more rounded contours in the shape of the battery cells 400 as shown in FIG. 6.

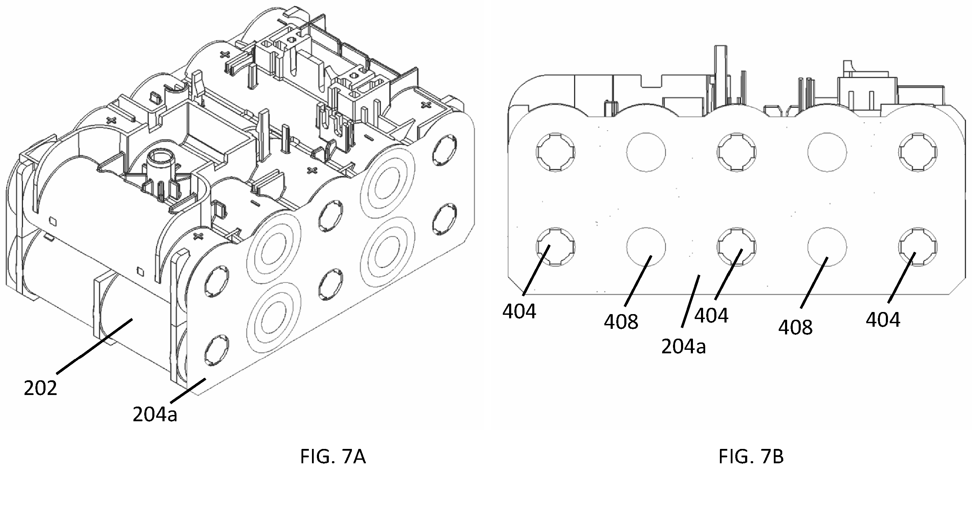

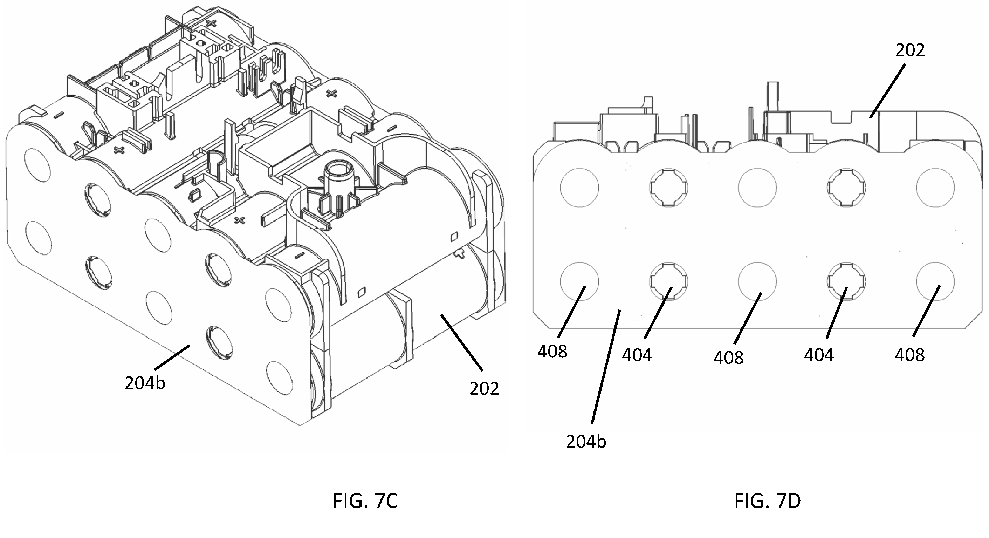

FIGs. 7A and 7B are isometric and elevation views, respectively, of the first side 202a of the cell holder 202, the plurality of battery cells 400 positioned in the cell holder 202, and the first insulating layer 204a abutting the first side 202a of the cell holder 202 and ends of the plurality of battery cells 400. FIGs. 7C and 7D are isometric and elevation views, respectively, of the second side 202b of the cell holder 202, the plurality of battery cells 400 positioned in the cell holder 202 and the second insulating layer 204b abutting the second side 202b of the cell holder 202 and ends of the plurality of battery cells 400.

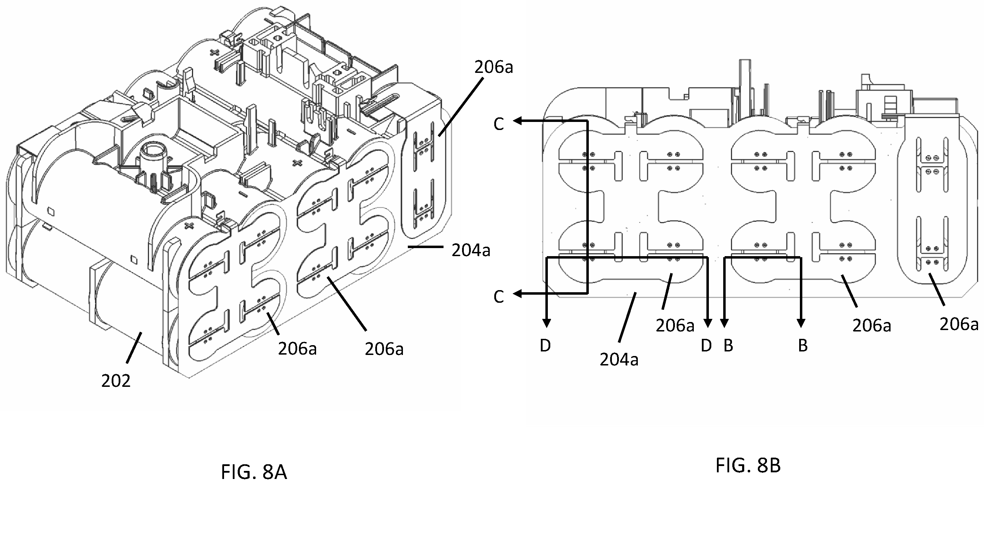

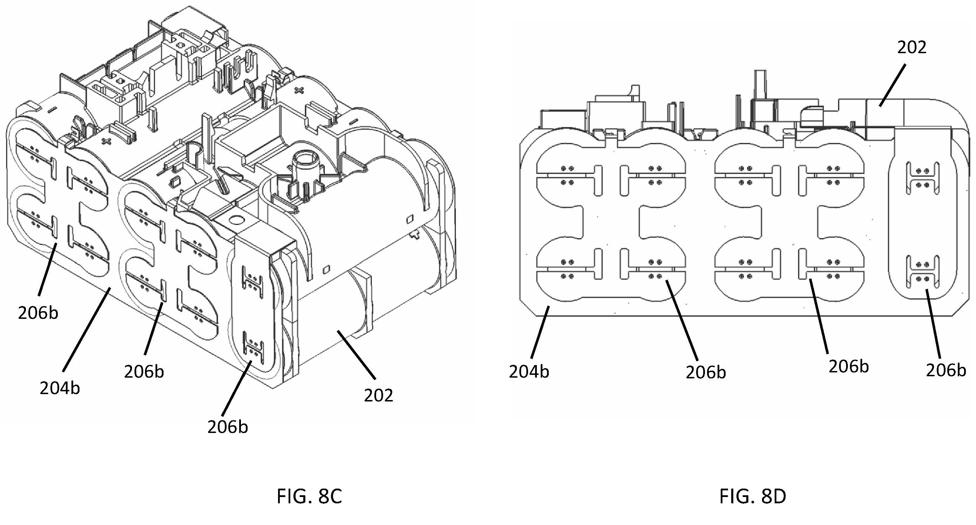

FIGs. 8A and 8B are isometric and elevation views, respectively, of the first side 202a of the cell holder 202, the plurality of battery cells 400 positioned in the cell holder 202, the first insulating layer 204a abutting the first side 202a of the cell holder 202 and ends of the plurality of battery cells 400 and the first set of battery straps 206a abutting the first insulating layer 204a and ends/terminals of the plurality of battery cells 400. FIGs. 8C and 8D are isometric and elevation views, respectively, of the second side 202b of the cell holder 202, the plurality of battery cells 400 positioned in the cell holder 202, the second insulating layer 204b abutting the second side 202b of the cell holder 202 and ends of the plurality of battery cells 400 and the second set of battery straps 206b abutting the second insulating layer 204b and ends/terminals of the plurality of battery cells 400.

In some embodiments, the battery cell 400 may provide a capacity of about 2 ampere hours (Ah) to about 8Ah and a nominal voltage of about 3.6V to about 3.7V, for example, for powering a cordless power tool.

As shown, the battery cells 400 may be fixed in position by a cell holder 202, with one or more of the first ends 406 and one or more of the second ends 410 of the battery cells 400 located at the first side 202a of the cell holder 202 and one or more of the first ends 406 and one or more of the second ends 410 of the battery cells 400 located at the second side 202b of the cell holder 202. The core pack 200 may include one of the set 206a, 206b of one or more battery straps 206 at each side 202a, 202b of cell holder 202. Each set 206a, 206b of battery straps 206 may be in contact with one or more of the plurality of battery cells 400 to electrically connect the plurality of battery cells 400 to one another and/or other components of the core pack 200, for example, the electronics module 208.

In some embodiments, an insulating element (or layer or sheet) 204 is placed at either end 203 of the core pack 200 between the battery cells 400 and the one or more battery straps 206 to insulate the shoulders of respective battery cells 400 from the adjacent battery straps 206. The insulating element 204, for a given end 203, may extend in a direction beyond the shoulders of any adjacent battery cells 400 to insulate the terminals of the battery cells 400 from the battery straps 206. Applicant has observed that polypropylene (PE), polypropylene (PP) and polyimide (PI) (such as Kapton^{®} available from E.I. du Pont de Nemours and Company) or mica do not have ester bonds, and are correspondingly resistant to such degradation by hydrolysis. Accordingly, in some embodiments, insulating layer/sheet 204 may include such chemically stable polymers to insulate the terminals of the battery cells 400 from the battery straps 206.

Since the battery cells 400 have the negatively charged housing 402 formed at least partially along the respective sidewall 414 thereof, providing an insulating sheet 204 between the positively charged terminal 404 and the sidewall 414 of the respective battery cells 400, where insulating sheet 204 may extend beyond the shoulders of the battery cells, may inhibit short circuit conditions.

FIG. 9 is a partial plan section view along section line B-B of FIG. 8B. As shown in FIG. 9, the sleeve 420 wraps around the negatively charged housing 402 - including the sidewall 414, the shoulder 416 and the top surface 412. As noted above, the sleeve 420 may be susceptible to crack/damage, particularly at the shoulder 416. If the sleeve 420 is damaged about the shoulder 416, the shortest distance between the battery strap 206, which is connected to the positively charged terminal 404, and the negatively charge housing 402, is reduced. Having the insulating layer/sheet 204 disposed in between the battery strap 206 and the negatively charged housing 402 - namely the top surface 412, the shoulder 416 and the sidewall 414 near the first end 406 of the battery cell 400 increases this shortest distance between the battery strap 406 and the housing 402, thus further insulating the battery cell from an electrical short circuit.

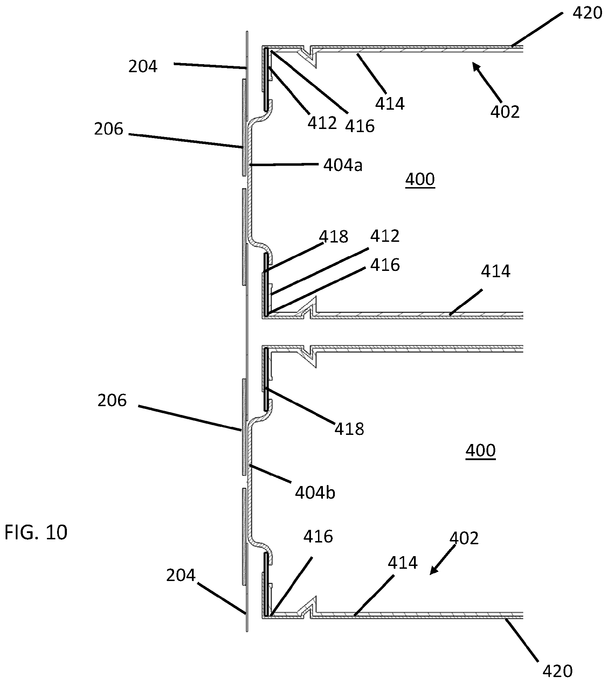

FIG. 10 is a partial elevation section view along section line C-C of FIG. 8B with a first positive terminal 404a and a second positive terminal 404b side-by-side and in connection with a battery strap 206. As shown in FIG. 10, the insulating layer/sheet 204 is disposed in between the battery strap 206 and the negatively charged housing 402 - namely the top surface 412, the shoulder 416, and the sidewall 414 near the first end 406 of the battery cell 400. The insulating layer 204 extends beyond the shoulder 416 of the battery cells 400. If any of the PET sleeves 420 of the battery cells 400 crack, the distance between the positively charged battery straps 206 and the negatively charged housing 402 decreases. In this case, the insulating sheet 204 may prevent an electrical short from the battery strap 206 to the battery cell housing 402, for example, the sidewall 414, the shoulder 416, or the top surface 412.

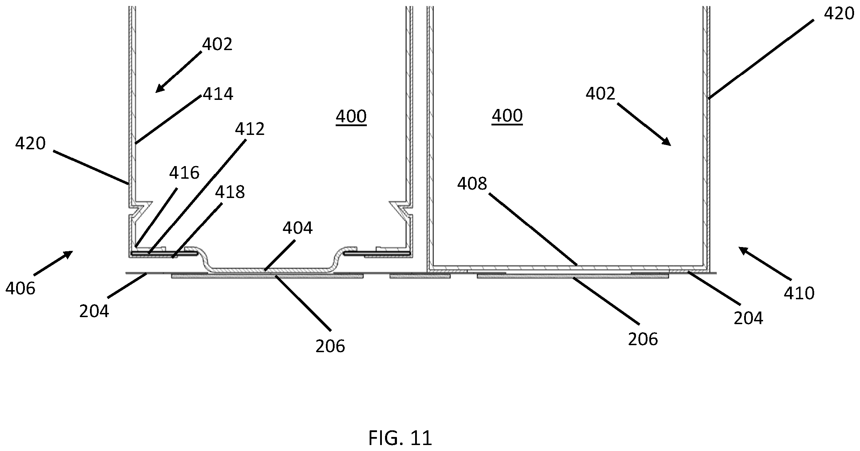

FIG. 11 is a partial plan section view along section line D-D of FIG. 8B with a positive terminal 404 and a negative terminal 408 side-by-side and in connection with a battery strap 206. As shown in FIG. 11, the insulting layer/sheet 204 is disposed between the positively charged terminal 404/the battery strap 206 and the negatively charged battery cell housing 402 - namely the top surface 412, the sidewall 414 and the shoulder 416 near the first end 406 of the battery cell 400. The insulating layer 204 extends beyond the shoulder 416 of the battery cells 400.

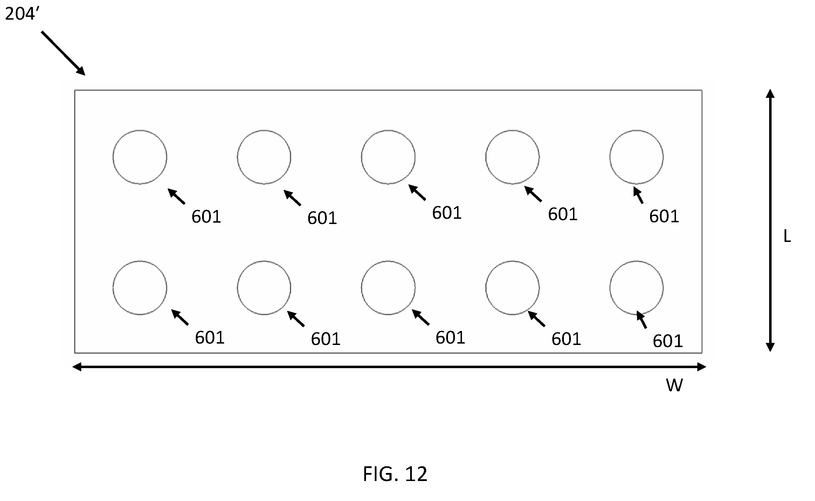

As shown in FIG. 12, in some embodiments, an insulating layer/sheet 204' may be rectangular in configuration with a width W and a length L sufficiently sized to correspond to the arrangement of the plurality of battery cells 400, as in the illustrated example, having two rows of five columns of battery cells 400 of the core pack 200. The width W and length L of insulating sheet 204' may be any suitable dimension greater than a planar dimension of the sides 202a, 202b of the cell holder 202. However, it will be understood that the insulating layer/sheet 204' may be configured and dimensioned to correspond to a different arrangement of battery cells 400 without departing from the disclosure.

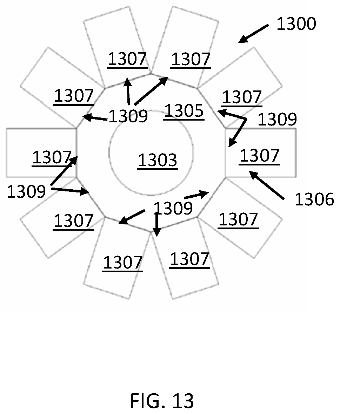

In an alternate example embodiment, the insulating element may be an insulating cap. The insulating cap may be disposed at a first end 406 of the battery cell 400 to further increase a creepage distance between the positively charged battery strap 206 and the negatively charge housing 204 the battery cell 400. FIGs. 13, 22, 23, 26 show variations of the insulting caps that may be disposed at least partially on or about a first end 406 of a respective battery cell 400 according to some embodiments, as further shown below. The creepage distance refers to a shortest distance between the positive and negative terminals, along a surface of the exterior housing of a battery cell.

FIG. 13 is a plan view of an example embodiment of an insulating element (or cap) 1300 of the present disclosure. As shown in FIG. 13, the insulating element 1300 may include a through hole 1303, a first portion 1305 extending at least partially around/surrounding the through hole 1303, and a second portion 1306 extending away from the first portion 1305. The through hole 1303 may be formed through the thickness of the first portion 1305 to allow contact between a respective battery strap 206 and a respective positive terminal 404 of the battery cell 400 when the insulating element 1300 is positioned on the end 406 of the battery cells 400.

The second portion 1306 may include a number of tabs 1307 foldably connected to the first portion 1305 of the insulating element 1300 at respective lines of weakening, such as fold lines 1309. In the illustrated embodiment, the first portion 1305 may have a generally decagon shaped outer profile. As such, the insulating element 1300 may include ten tabs 1307 - a tab 1307 associated with each of the ten sides of the first portion 1305. Each of the tabs 1307 is foldably connected to the first portion 1305 at a respectively oriented fold line 1309. The insulating element 1300 including the first portion 1305 and the tabs 1307 may be secured in place on the battery cell 400 prior to positioning of the battery cell 400 in the cell holder 202. In some cases, the tabs 1307 may be secured by PE/PP tape, glue, or similar bonding polymers that are free from ester bonds. It will be understood that the insulating element 1300 may have a different arrangement without departing from the disclosure.

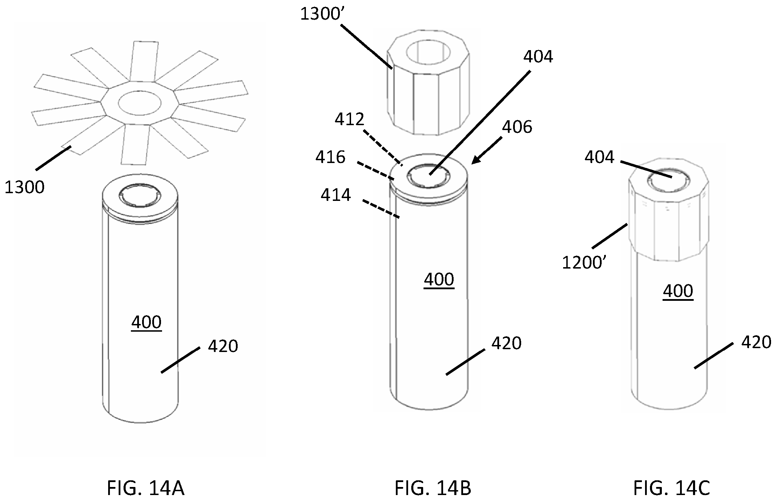

FIG. 14A is an isometric view of the insulating element/cap 1300 of FIG. 13 prior to folding and placement onto the battery cell 400. With additional reference to FIGs. 13, 14B and 14C, a first process for forming the insulating cap and disposing the insulating cap onto the battery cell is illustrated. First, as shown in FIG. 14A, a battery cell 400 and an insulating element 1300 may be provided. Then, as shown in FIG. 14B, the tabs 1307 of the second portion 1306 may be folded along the folding lines 1309 to form an insulating cap 1300'. Then, as shown in FIG. 14C, the insulating cap 1300' may be placed/disposed onto the battery cell 400, such that the positive terminal 404 of the battery cell 400 is exposed via the through hole 1303 of the first portion 1305 and the first portion 1305 and the tabs 1307 of the second portion 1306 cover/surround the top surface 412, the shoulder 416 and a portion of the side wall 414 of the battery cell 400.

In an alternate example embodiment, the insulating element/cap 1300 may be formed by two discrete components: a first component equivalent to element 1305 that is placed onto the top of the battery cell 400 and a second component equivalent to tabs 1307 that are placed onto the sidewall 414/sleeve 420.

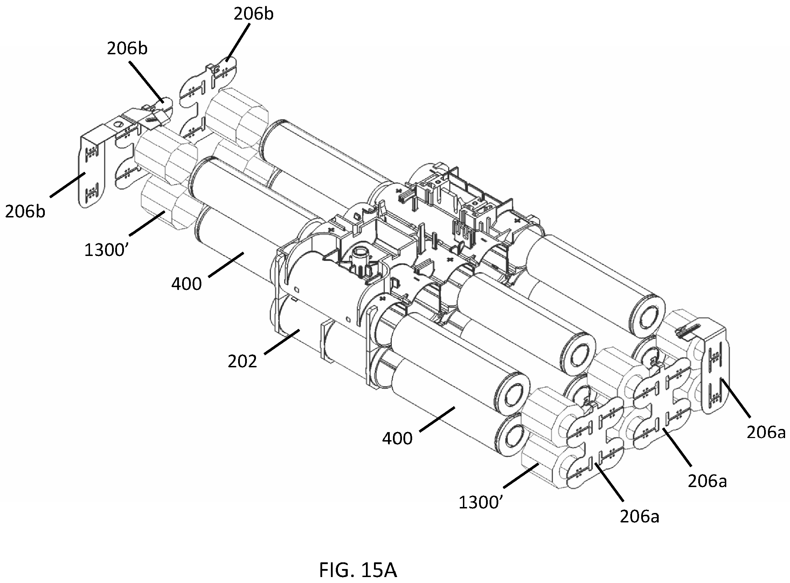

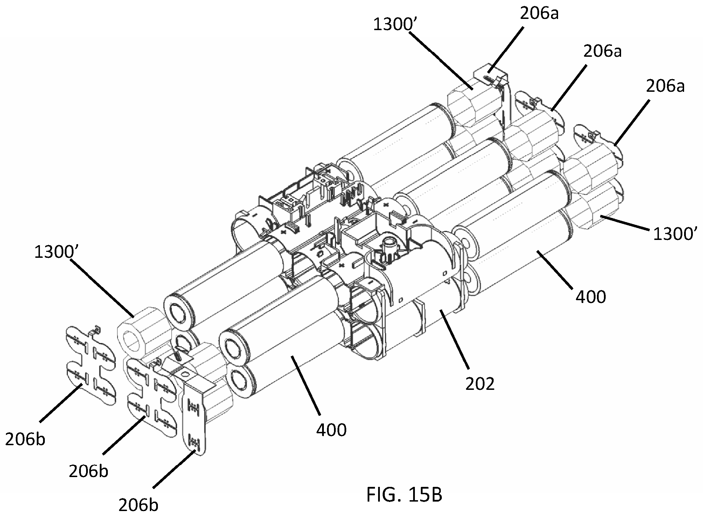

FIGs. 15A-15B are isometric exploded view of the cell holder 202, the plurality of battery cells 400, a plurality of insulating caps 1300' and the sets of battery straps 206 according to an example embodiment of the disclosure.

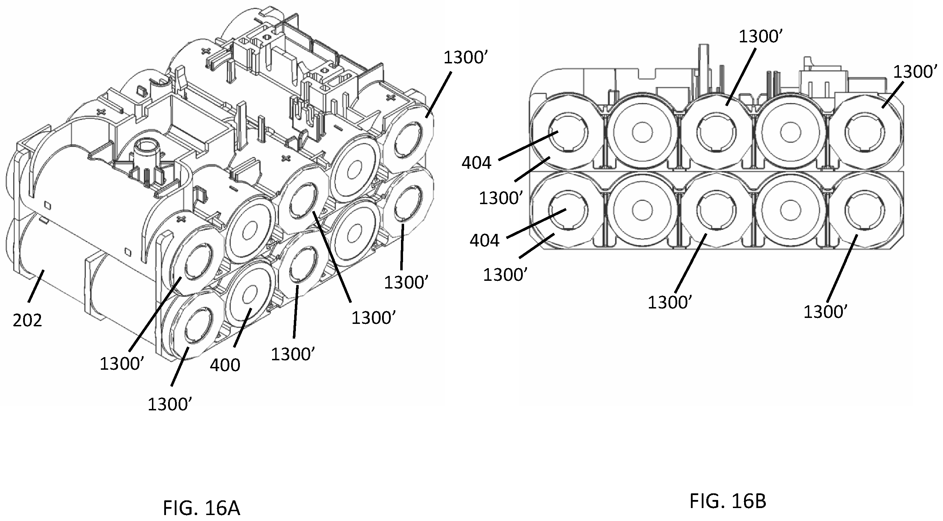

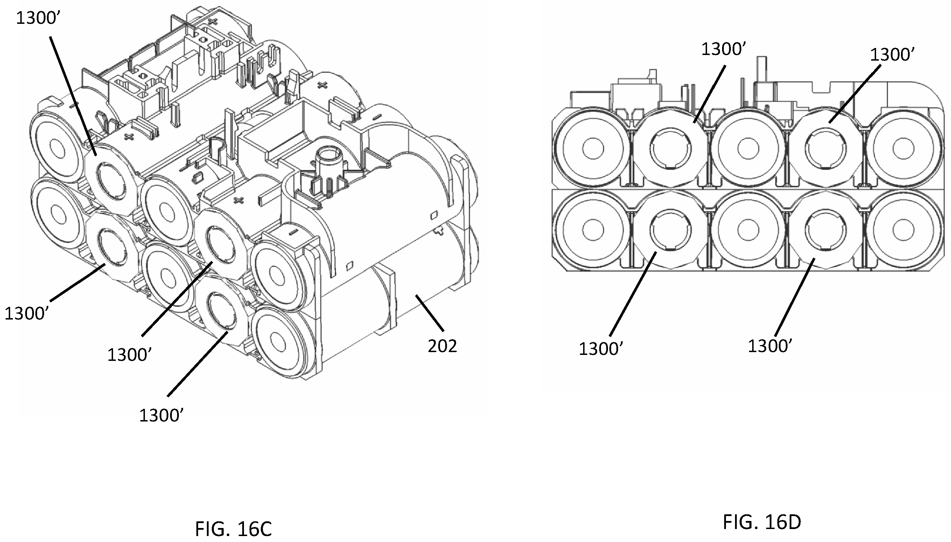

FIGs. 16A-16B are isometric and side views of the first side 202a of the cell holder 202, the plurality of insulating caps 1300' placed onto the plurality of battery cells 400 and the combination of the plurality of insulating caps 1300' and the plurality of battery cells 400 positioned in the cell holder 202. FIGs. 16C-16D are the second side 202b of the cell holder 202, the plurality of insulating caps 1300' placed onto the plurality of battery cells 400 and the combination of the plurality of insulating caps 1300' and the plurality of battery cells 400 positioned in the cell holder 202.

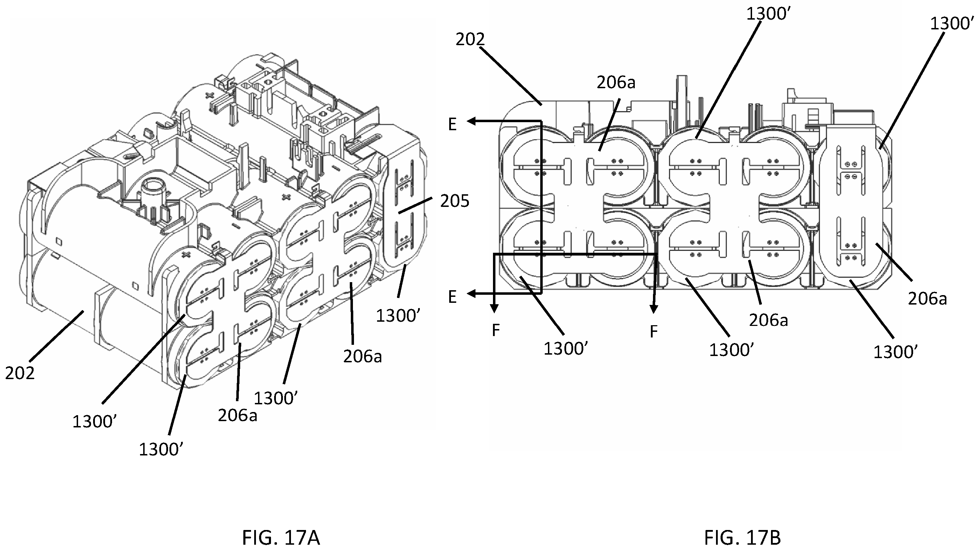

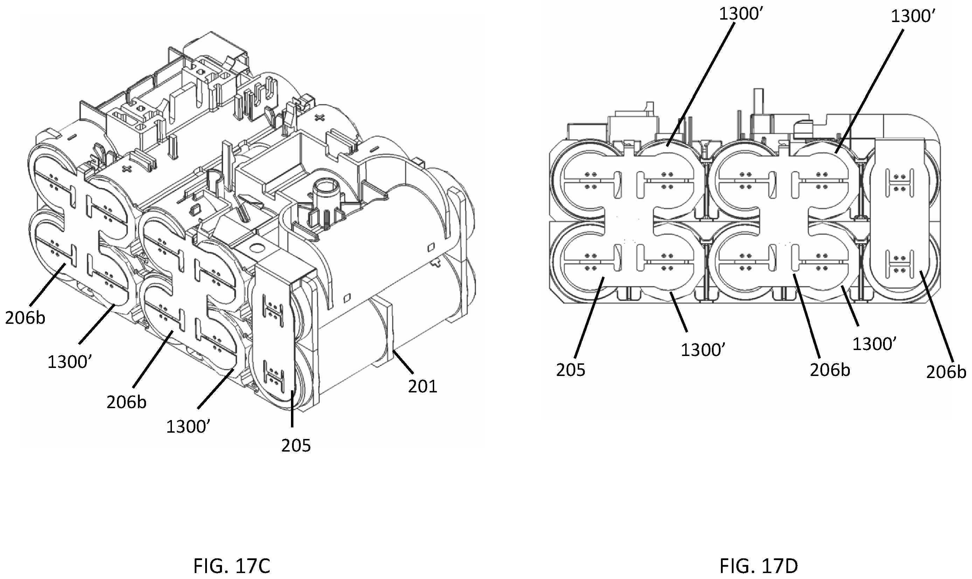

FIGs. 17A-17B are isometric and side views of the first side 202a of the cell holder 202, the combination of the plurality of insulating caps 1300' and the plurality of battery cells 400 positioned in the cell holder 202, and the sets of battery straps 206 abutting the plurality of insulating caps 1300' and the plurality of battery cells 400. FIGs. 17C-17D are isometric and side views of the second side 202b of the cell holder 202, the combination of the plurality of insulating caps 1300' and the plurality of battery cells 400 positioned in the cell holder 202 and the sets of battery straps 206 abutting the plurality of insulating caps 1300' and the plurality of battery cells 400.

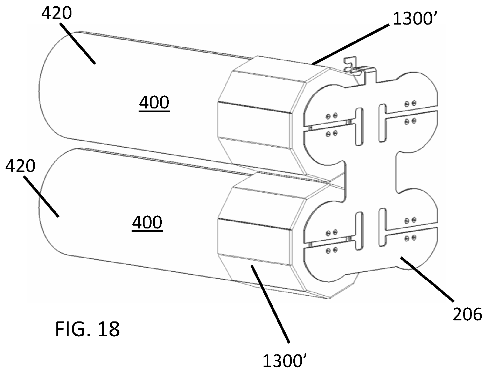

FIG. 18 is an isometric view of two battery cells 400 connected by a battery strap 206 according to an example embodiment of the disclosure. As shown, the battery cells 400 may be wrapped in a PET sleeve 420, after which the insulating caps 1300' are fitted/applied onto the first end 406 of each battery cell 400. The battery strap 206 may then be welded onto the first terminal 404 of the battery cells 400.

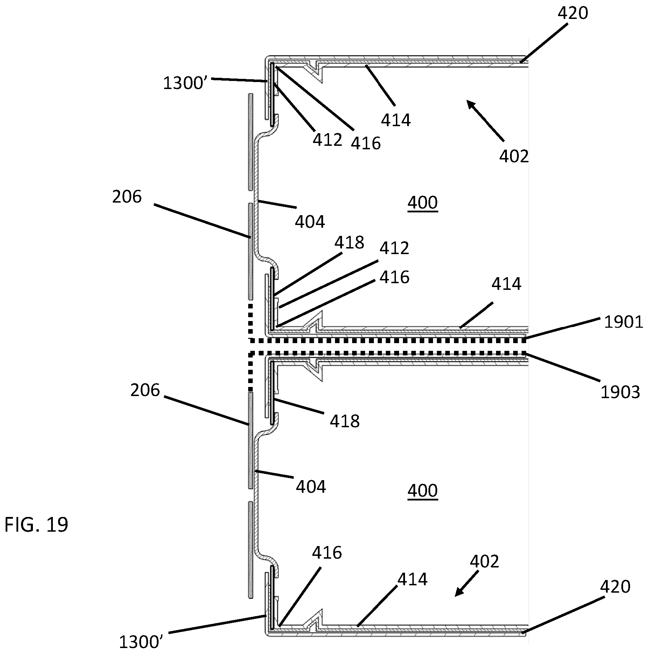

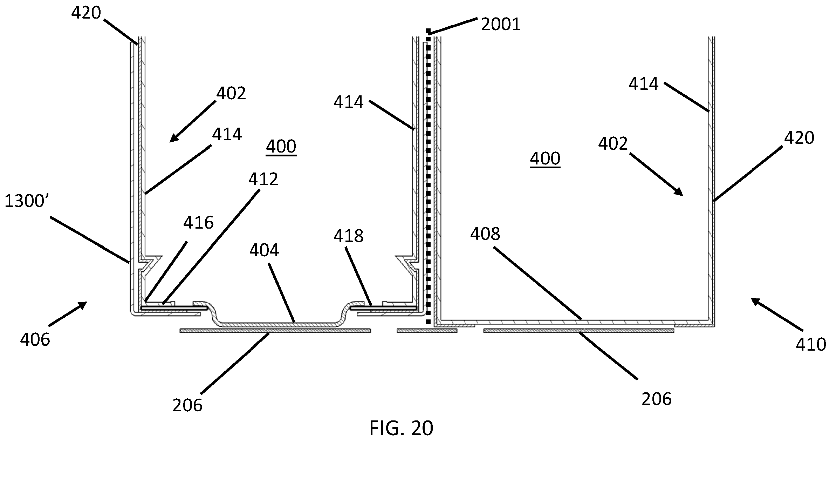

FIG. 19 is a partial elevation section view along section line E-E of FIG. 17B. FIG. 20 is a partial plan section view along section line F-F of FIG. 17B. As shown, the battery cells 400 with the insulating caps 1300' has a longer creepage distances 1901, 1903, 2001 (creepage distance being the shortest distance from the positively charged battery strap 206 to the negatively charged housing 402 - including the top surface 412, the sidewall 414 and the shoulder 416 - of the battery cell 400) compared to the battery cell 400 configuration without the insulating caps 1300' (the distance would be from the battery straps to the immediate shoulder of the battery cell 400). If the PET sleeve 420 were to crack or perforate, the longer creepage distance decreases a chance of any of the battery cells 400 from short circuiting.

The insulating element 1300 may be made of insulating polymers that are free from ester bonds, such as mica, polyethylene (PE), polyimide (PI) (such as Kapton^{®} available from E.I. du Pont de Nemours and Company), or a combination thereof. A thickness of the insulating element 1300 may be between about 0.05mm to about 1mm.

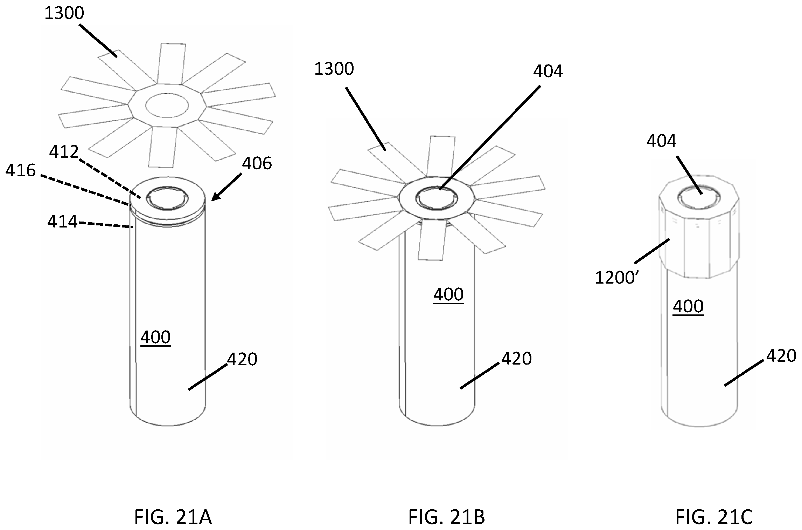

FIG. 21A is an isometric view of the insulating element/cap 1300 in a pre-folded state prior to disposition onto the battery cell 400. With reference to FIGs. 21B and 21C, a second process for forming an insulating cap and disposing the insulting cap onto a battery cell is illustrated. First, as shown in FIG. 21B, the first portion 1305 of the insulating element 1300 may be positioned over the positive end 406 of the battery cell 400 such that the positive terminal 404 of the battery cell 400 is exposed via the through hole 1303 of the first portion 1305. Then, as shown in FIG. 21C, the tabs 1307 of the second portion 1306 of the insulating element 1300 may be folded downwardly - toward a second end of the battery cell - at the respective fold lines 1309 to extend across the shoulder 416 of the battery cell 400 and onto the sidewall 414 of the battery cell 400. In such an arrangement, the tabs 1307 may be positioned in generally abutting relation along sidewall 414 of the battery cell 400.

Upon positioning of the tabs 1307 as described above, the insulating element 1300 may generally form the shape of an insulating cap 1300' that receives an upper portion - first end - of the battery cell 400 including the positive end 406 thereof. The first portion 1305 of the insulating element 1300' may be arranged such that the through hole 1303 is positioned to expose the positive terminal 404 of the battery cell 400 while extending across the PET sleeve and the insulating ring 418 and the shoulder 416, and such that the second portion 1306 of the insulating element 1300' is positioned extending downwardly - toward a second end of the battery cell - onto a portion of the sidewall 414 of the battery cell 400. In some embodiments, the second portion 1306 of the insulating element 1300' may at least partially overlap the shoulder 416 of the respective battery cell 400. The through hole 1303 may have a diameter smaller than an inner diameter of the insulating ring 418 of the battery cell 400, e.g., diameter D1.

The insulating element 1300 may be made of insulating polymers that are free from ester bonds, such as mica, polyethylene (PE), polypropylene (PP), polyvinyl chloride (PVC), polyphenylene sulfide (PPS), polyimide (PI) (such as Kapton^{®} available from E.I. du Pont de Nemours and Company), or a combination thereof. A thickness of the insulating element 1300 may be between about 0.05mm to about 1mm.

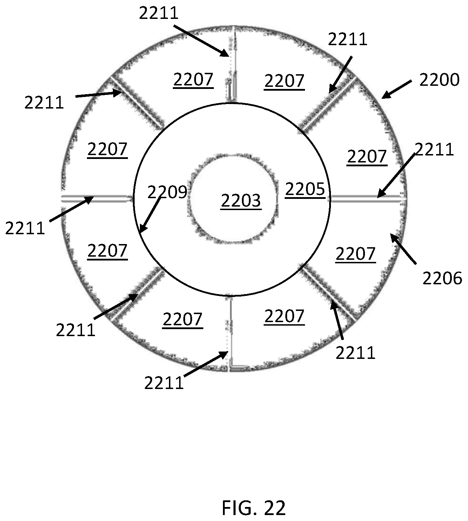

FIG. 22 is a plan view of another example embodiment of an insulating element 2200 in accordance with the present disclosure. Similar to the insulating element 1300, the insulating element 2200 may be folded onto a first end 406 of a battery cell 400 to increase a creepage distance between the positive terminal 404 of the battery cell 400 and the negatively charged housing 402 of the battery cell 400, and/or to increase a creepage distance between a positively charged battery strap 206 and the negatively charged housing 402 of the battery cell 400. The insulating element 2200 may be made of mica, polyethylene (PE), polypropylene (PP), polyvinyl chloride (PVC), polyphenylene sulfide (PPS), polyimide (PI) (such as Kapton^{®} available from E.I. du Pont de Nemours and Company), or a combination thereof. A thickness of the insulating element 2200 may be about 0.05mm to about 1mm.

As shown in FIG. 22, the insulating element 2200 may include a through hole 2203, a first portion 2205 extending at least partially around/surrounding the through hole 2203, and a second portion 2206 extending away from the first portion 2205. The through hole 2203 is formed through the thickness of the insulating element 2200 to allow contact between a respective battery strap 206 and a respective positive terminal 404 of the battery cell 400 when the insulating element 2200 is positioned on an end 406 of the battery cell 400.

The second portion 2206 may include a number of tabs 2207 at least partially separated by respective cuts or slits 2211 and flexibly connected to the first portion 2205 of the insulating element 2200 along respective portions 2209 of the insulating element 2200. In some embodiments, the tabs 2207 may be foldably connected to the first portion 2205 at one or more lines of weakening.

The tabs 2207 may be secured in place prior to positioning of the battery cell 400 in the cell holder 202. In some cases, the tabs 2207 may be secured by PE tape, glue, or similar bonding polymers that are free from ester bonds. It will be understood that the insulating element 2200 may have a different arrangement without departing from the disclosure.

In this regard, the first portion 2205 of the insulating element 2200 may be positioned over the first end 406 of the battery cell 400. The tabs 2207 of the second portion 2206 of the insulating element 2200 may be bent downwardly - toward a second end 410 of the battery cell 400 - to extend across the shoulder 416 of the battery cell 400 and onto the sidewall 414 of the battery cell 400. In such an arrangement, the tabs 2207 may be positioned in generally abutting relation along the sidewall 414 of the battery cell 400.

Upon positioning of the tabs 2207 as described above, the insulating element 2200 may generally form the shape of a cap that receives an upper portion of the battery cell 400 including the first end 406 thereof. The first portion 2205 of the insulating element 2200 may be arranged such that the through hole 2203 is positioned to expose the positive terminal 404 of the battery cell 400 while extending at least partially across the PET sleeve 420 and the shoulder 416, and such that the second portion 2206 of the insulating element 2200 is positioned extending downwardly - towards the second end 410 of the battery cell 400 - onto a portion of the sidewall 414 of the battery cell 400. In some embodiments, the second portion 2206 of the insulating element 2200 may at least partially overlap the shoulder 416 of the respective battery cell 400. The through hole 2203 may have a diameter smaller than an inner diameter of the insulating ring 418 of the battery cell 400, e.g., diameter D1.

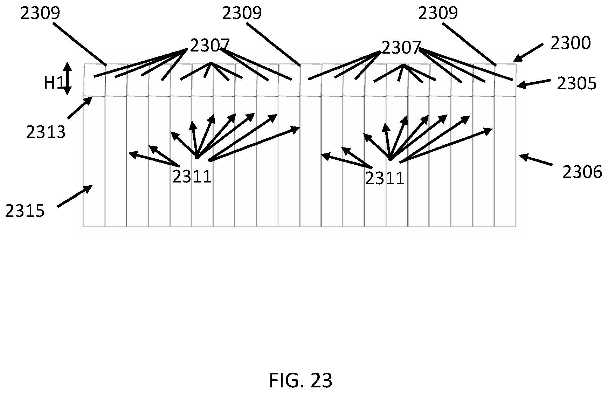

FIG. 23 is a plan view of another example embodiment of an insulating element 2300 in accordance with the present disclosure. The insulating element 2200 may be disposed onto the first end 406 of the battery cell 400 to extend a creepage distance between the negatively charged shoulder 416 of the battery cell 400 and the positively charged terminal 404 of the battery cell 400. The battery cell 400 may be any of the battery cells 400 in core pack 200 of FIGs. 2A-2B.

One or more battery cells 400 in core pack 200 may be insulated with the insulating element 2200.

The insulating element 2300 of Fig. 23 may be made of any insulating polymers that are free from ester bonds, such as mica, polyethylene (PE), polypropylene (PP), polyvinyl chloride (PVC), polyphenylene sulfide (PPS), polyimide (PI) (such as Kapton^{®} available from E.I. du Pont de Nemours and Company), or a combination thereof. A thickness of the insulating element 2300 may be between about 0.05mm to about 1mm.

Still referring to FIG. 23, the insulating element 2300 may include a first portion 2305 and a second portion 2306 extending away from the first portion 2305. A plurality of tabs 2307 are at least partially formed by vertical cuts 2309 formed along the first portion 2305, each of the tabs 2307 may be foldably connected to the second portion 2306 at a respective portion of a line of weakening such as a first fold line 2313.

Vertical lines of weakening such as fold lines 2311 are positioned extending across the second portion 2306 of the insulating element 2300 so as to form a plurality of sections 2315 thereof, each section 2315 foldably connected to a respective tab 2307 of the first portion 2305 of the insulating element 2300 at a respective portion of the fold line 2311. In the illustrated embodiment, the tabs 2307 may have a height H1 corresponding to about (D2-D1)/2, where D2 is a diameter of the shoulder 416/sidewall 414 of the battery cell 400, and D1 is an inner diameter of the insulating ring 418 of the battery cell 400.

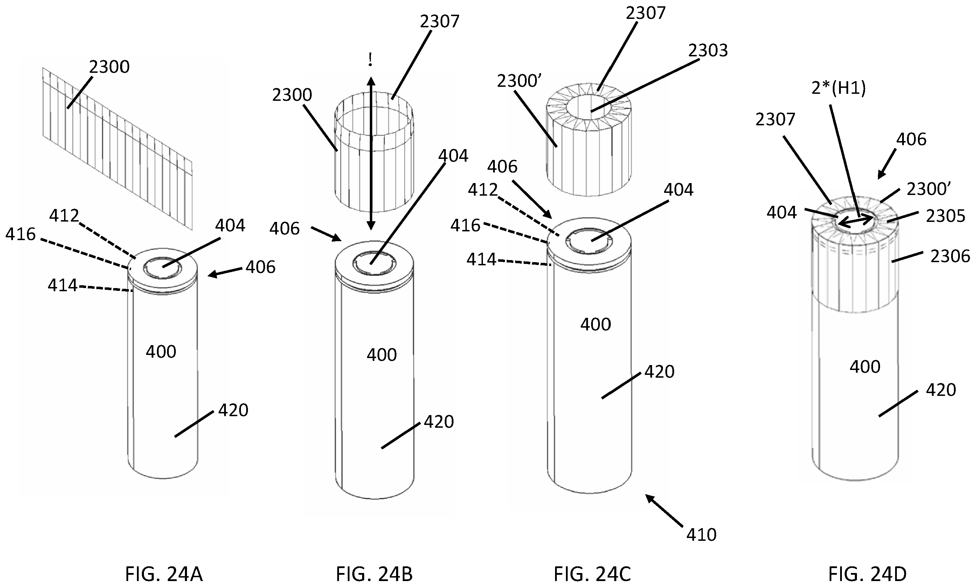

With reference to FIGs. 24A-24D, a first process for forming an insulating cap and disposing the insulating cap onto a battery cell is illustrated. First, as shown in FIG. 24A, the battery cell 400 and the insulating element 2300 may be provided. Second, as shown in FIG, 24B, the insulating element 2300 may be shaped into a cylinder having a long axis A parallel to the fold lines 2311. Third, as shown in FIG. 24C, the tabs 2307 of the first portion 2305 may be folded at the first fold line 2313 to form an insulating cap 2300'. Then, as shown in FIG. 24D, the insulating cap 2300' may be placed/disposed onto the first end 406 of the battery cell 400, such that the positive terminal 404 of the battery cell 400 is exposed via the through hole 2303 of the first portion 2305 and the second portion 2306 covers/surrounds the shoulder 416, the top surface 412, and a portion of the side wall 414 of the battery cell 400.

Upon positioning of the tabs 2307, as described above, the insulating element 2300 may generally form the shape of the insulating cap 2300' that receives the first end of the battery cell 400. The first portion 2305 of the insulating element 2300 may be arranged such that the through hole 2303 is positioned to expose the positive terminal 404 of the battery cell 400 while extending across the PET sleeve 420 and the insulating ring 418 and the shoulder 416, and such that the second portion 2306 of the insulating element 2300 is positioned extending downwardly - toward the second end 410 of the battery cell 400 - onto a portion of the sidewall 414 of the battery cell 400. In some embodiments, the second portion 2306 of the insulating element 2300 may at least partially overlap the shoulder 416 of the respective battery cell 400. The through hole 2303 may have a diameter smaller than an inner diameter of the insulating ring 418 of the battery cell 400, e.g., diameter D1.

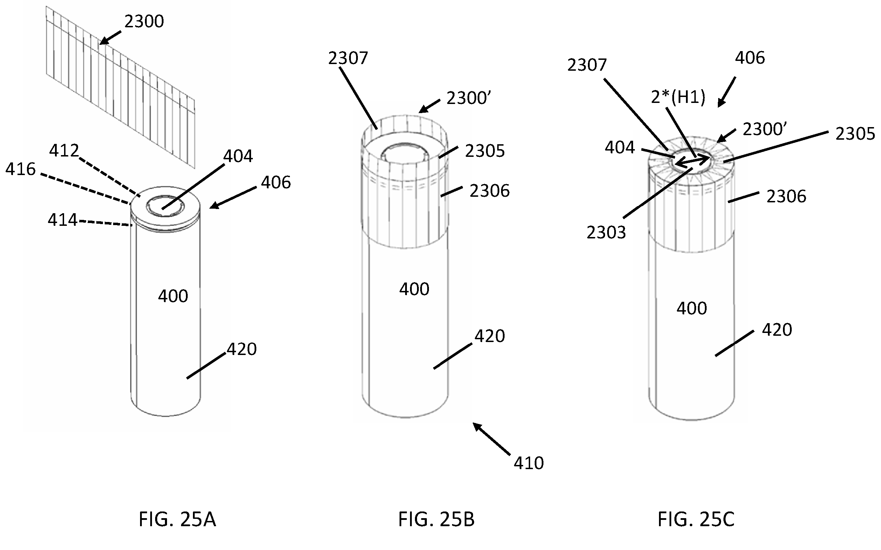

With reference to FIGs. 25A-25C, a second process for forming an insulating cap and disposing the insulting cap onto a battery cell is illustrated. First, as shown in FIG. 25A, the battery cell 400 and the insulating element 2300 may be provided. Second, as shown in FIG, 25B, the second portion 2306 of the insulating element 2300 may be wrapped around the sidewall 414/the sleeve 420 of the battery cell 400 at the first end 406 such that the fold line 2311 aligns with a plane of the PET sleeve 420 parallel to the fold line 2311. Then, as shown in FIG. 25C, the tabs 2307 of the first portion 2305 of the insulating element 2300 may be folded at the fold line 2313. Upon positioning of the tabs 2307, as described above, the insulating element 2300 may generally form the shape of a cap 2300' that is positioned about the first end 406 of the battery cell 400. The first portion 2305 of the insulating element 2300 may be arranged such that a through hole 2303 is positioned to expose the positive terminal 404 of the battery cell 400 while extending over the PET sleeve 420 and across the shoulder 416, and such that the second portion 2306 of the insulating element 2300 is positioned extending downwardly - toward the second end 410 of the battery cell 400 - onto a portion of the sidewall 414 and the sleeve 420 of the battery cell 400. In some embodiments, the second portion 2306 of the insulating element 2300 may at least partially overlap the shoulder 416 of the respective battery cell 400.

In this regard, the plurality of sections 2315 of the second portion 2306 of the insulating element 2300 may be at least partially folded relative to one another at the respective fold lines 2311 to wrap or contour about the sidewall 414 of the battery cell 400.

In some embodiments, the second portion 2306 of the insulating element 2300 may at least partially overlap the shoulder 416 of the respective battery cell 400.

The first portion 2305 of insulating element 2300 may be arranged such that the through hole or aperture 2303 formed by the arrangement of the tabs 2307 is positioned to expose the positive terminal 404 of the battery cell 400 while extending at least partially across the shoulder 416, and such that the second portion 2306 of the insulating element 2300 is positioned extending downwardly over a portion of the sidewall 414 of the battery cell 400. The through hole or aperture 2303 formed by the arrangement of tabs 2307 may have a diameter greater than the diameter of the positive terminal 404 of the battery cell 400, e.g., diameter D1. In some embodiments, the through hole or aperture 2303 formed by the arrangement of tabs 2307 may have a diameter corresponding to the height H1.

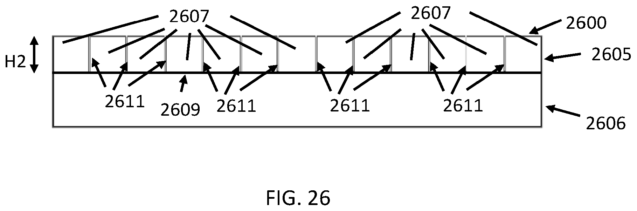

FIG. 26 is an elevation view of another example embodiment of an insulating element 2600 in accordance with the present disclosure. The insulating element 2600 may be disposed onto a first end 406 of the battery cell 400 - the end including the positive terminal 404 - to extend a creepage distance between the shoulder 416 of the battery cell 400 and the battery strap 406 connected to the positive terminal 404 of the battery cell 400.

One or more battery cells 400 in core pack 200 may be insulated with the insulating element 2600.

The insulating element 2600 illustrated in Fig. 26 may be made of any insulating polymers that are free from ester bonds, such as mica, polyethylene (PE), polypropylene (PP), polyvinyl chloride (PVC), polyphenylene sulfide (PPS), polyimide (PI) (such as Kapton^{®} available from E.I. du Pont de Nemours and Company), or a combination thereof. A thickness of the insulating element 2600 may be between about 0.05mm to about 1mm.

As shown in FIG. 26, the insulating element 2600 may include a first portion 2605 and a second portion 2606 extending from the first portion 2605. The first portion 2605 may include a number of slits 2611 dividing the first portion 2605 into a number of tabs 2607 foldably connected to the second portion 2606 of the insulating element 2600 at respective portions of a fold line 2609. The tabs 2607/slits 2611 may have a height H2 corresponding to about (D2-D1)/2, where D2 is a diameter of the shoulder 416/sidewall 414 of housing 402 of the battery cell 400, and D1 is an inner diameter of the insulating ring 418 of the battery cell 400, as seen in FIG. 4A.

The second portion 2606 may be wrapped around the sidewall 414 of a battery cell 400 and the tabs 2607 may be folded at the fold line 2609 onto the first end 406 of the battery cell 400 in at least partial overlapping relation and to at least partially form a through hole or aperture therebetween. The tabs 2607 may be secured in position, but need not be sealed, by PE tape, glue, or similar bonding polymers that are free from ester bonds. The through hole or aperture formed by the arrangement of tabs 2607 may expose a portion of a respective terminal of the battery cell 400 for contact with a respective battery strap 206 when the insulating element 2600 is positioned on the first end 406 of the battery cell 400. It will be understood that the insulating element 2600 may have a different arrangement without departing from the disclosure.

In view of the foregoing, insulation elements are provided for at least partially or fully extending across the shoulder of a battery cell adjacent a wall that forms a portion of a negative terminal of the battery cell, the shoulder separated from a positive terminal of the battery cell by an insulation ring. Such barrier provided on the shoulder of the battery cell may extend a creepage distance or otherwise inhibit the formation of conductive pathways between negative and positive terminal portions of the battery cell due to electrochemical corrosion and associated byproducts. Furthermore, various insulating elements described herein may be conveniently manufactured from available substrates and are conducive to printing or marking, e.g., with targets or locating features that may facilitate assembly with battery cells, associated core packs and battery packs.

The present disclosure and its various embodiments as described above uniquely address the observed, noted and researched findings and improve on the prior and current state of the art systems. The listed products, features and embodiments as described in the present disclosure should not be considered as limiting in any way.

Although the present disclosure has been described in detail for the purpose of illustration, it is to be understood that such detail is solely for that purpose and that the present disclosure is not limited to the disclosed embodiments, but, on the contrary, is intended to cover modifications and equivalent arrangements that are within the spirit and scope of the appended claims. In addition, it is to be understood that the present disclosure contemplates that, to the extent possible, one or more features of any embodiment may be combined with one or more features of any other embodiment.

The illustration of the embodiments of the present disclosure should not be taken as restrictive in any way since a myriad of configurations and methods utilizing the present disclosure may be realized from what has been disclosed or revealed in the present disclosure. The systems, features and embodiments described in the present disclosure should not be considered as limiting in any way. The illustrations are representative of possible construction and mechanical embodiments and methods to obtain the desired features. The location and/or the form of any minor design detail or the material specified in the present disclosure may be changed and doing so will not be considered new material since the present disclosure covers those executions in the broadest form.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by a person of ordinary skill in the art in the context of the various elements, components, regions, layers and/or sections being described.

The foregoing illustrated embodiments have been provided to illustrate the structural and functional principles of the present disclosure and are not intended to be limiting. To the contrary, the present disclosure is intended to encompass all modifications, alterations and substitutions within the spirit and scope of the appended claims.

## Claims

1. A battery pack for a power tool, comprising:
a battery pack housing;
a plurality of battery cells held by a cell holder in an interior of the battery pack housing, each of the plurality of battery cells comprising an end with a positive terminal, a wall forming a portion of a negative terminal, an end of the wall forming a shoulder;
a plurality of battery straps contacting the plurality of battery cells, each battery strap contacting the positive terminal of at least one battery cell of the plurality of battery cells; and
an insulating element at least partially disposed between the plurality of battery straps and the end of the respective at least one battery cell, the insulating element extending across the shoulder of the respective at least one battery cell to inhibit electrical shorting from the positive terminal to the wall of the respective at least one battery cell.

2. The battery pack of claim 1, wherein each battery cell of the plurality of battery cells is received in a respective insulating sleeve, the insulating element including an insulating layer and the insulating layer at least partially overlapping the insulating sleeve of the respective at least one battery cell.

3. The battery pack of claim 2, wherein the insulating sleeve at least partially overlaps an insulating ring of a battery cell of the plurality of battery cells, the insulating ring surrounding the positive terminal between the positive terminal and the shoulder of the battery cell of the plurality of battery cells.

4. The battery pack of claim 2 or 3, wherein the insulating sleeve comprises polyethylene terephthalate (PET), and the insulating layer comprises at least one of: a polyimide, polypropylene a low density polyethylene, polyphenylene sulfide, mica or another hydrolysis resistant material.

5. The battery pack of any of claims 2 to 4, wherein the insulating layer comprises a material that is resistant to degradation by hydrolysis from alkaline electrolyte or the insulating layer comprises a material devoid of ester bonds.

6. The battery pack of any of claims 2 to 5, wherein the insulating layer comprises a plurality of through holes for being aligned with the positive terminal of the respective at least one battery cell.

7. The battery pack of claim 6, wherein the end of each battery cell of the plurality of battery cells is a positive end and each battery cell of the plurality of battery cells comprises a negative end opposite the positive end and including a portion of the negative terminal, wherein the plurality of battery straps is a first plurality of battery straps, the insulating layer is a first insulating layer, and the battery pack further comprises:
a second plurality of battery straps contacting the plurality of battery cells opposite the first plurality of battery straps, each battery strap contacting the negative terminal of at least one battery cell of the plurality of battery cells; and
a second insulating layer between the second plurality of battery straps and the end of the respective at least one other battery cell, the insulating layer extending across the shoulder of the respective at least one other battery cell to inhibit electrical shorting from the positive terminal to the wall of the battery cell.

8. The battery pack of claim 7, wherein at least one through hole of the plurality of through holes has a radius smaller than a radius of the end of each of battery cell of the plurality of battery cells.

9. The battery pack of any of claims 2 to 8, wherein the insulating layer has a thickness of about 0.05mm to about 1mm.

10. A battery pack for a power tool, comprising:
a battery pack housing;
a plurality of battery cells held by a cell holder in an interior of the battery pack housing, each battery cell comprising an end with a positive terminal, a wall forming a portion of a negative terminal, an end of the wall forming a shoulder;
a plurality of battery straps contacting the plurality of battery cells, each battery strap contacting the positive terminal of at least one battery cell of the plurality of battery cells; and
an insulating element at least partially disposed between at least one battery strap of the plurality of battery straps and the end of a respective at least one battery cell, the insulating element extending across the shoulder of the respective at least one battery cell and onto the wall thereof to extend a creepage distance from the positive terminal to the wall of the battery cell.

11. The battery pack of claim 10, wherein each battery cell of the plurality of battery cells is received in a respective insulating sleeve, the insulating element includes an insulating cap and the insulating cap is at least partially overlapping the insulating sleeve of the respective at least one battery cell, wherein the insulating sleeve comprises polyethylene terephthalate (PET), and the insulating cap comprises at least one of: a polyimide, polypropylene, polyethylene, mica, or another hydrolysis resistant material.

12. The battery pack of claim 11, wherein the insulating cap comprises a first portion positioned on an end of the respective at least one battery cell, and a second portion extending downwardly from the first portion.

13. The battery pack of claim 12, wherein the second portion comprises a plurality of tabs, each tab of the plurality of tabs separated by a respective slit and for being positioned extending at least partially along the wall of the respective at least one battery cell.

14. The battery pack of any of claims 11 to 13, wherein the insulating cap comprises a first portion and a second portion comprising a plurality of tabs foldably connected to the first portion at a respective fold line, each tab of the plurality of tabs extending at least partially along the wall of the respective at least one battery cell.

15. The battery pack of any of claims 11 to 14, wherein the end of each battery cell of the plurality of battery cells is a positive end and each battery cell of the plurality of battery cells comprises a negative end opposite the positive end and including a portion of the negative terminal, wherein the insulating cap is a first insulating cap, and the battery pack further comprises a second insulating cap positioned opposite the first insulating cap along the plurality of battery cells and at least partially covering a positive end of at least one battery cell of the plurality of battery cells.

16. The battery pack of any of claims 11 to 15, wherein the insulating cap comprises a first portion, the first portion comprising a plurality of tabs folded onto the end of the respective at least one battery cell, and, optionally:
wherein the insulating cap comprises a second portion at least partially extended along the wall of the respective at least one battery cell, the plurality of tabs of the first portion foldably connected to the second portion.
